(19) Europäisches Patentamt / European Patent Office / Office européen des brevets

(11) **EP 3 866 237 B1**

(12) **EUROPEAN PATENT SPECIFICATION**

(45) Date of publication and mention
of the grant of the patent:
**15.04.2026 Bulletin 2026/16**

(21) Application number: **20766260.2**

(22) Date of filing: **03.03.2020**

(51) International Patent Classification (IPC):
$H01M\ 8/04014^{(2016.01)}$    $H01M\ 8/04089^{(2016.01)}$
$H01M\ 8/04746^{(2016.01)}$    $H01M\ 8/04119^{(2016.01)}$
$H01M\ 8/18^{(2006.01)}$

(52) Cooperative Patent Classification (CPC):
**H01M 8/186; H01M 8/04022; H01M 8/04052;
H01M 8/04097; H01M 8/04164; H01M 8/04753;
H01M 8/04761;** H01M 2250/10; H01M 2250/402;
H01M 2250/405; H01M 2300/0074; Y02B 90/10;
Y02E 60/36; Y02E 60/50

(86) International application number:
**PCT/KR2020/002990**

(87) International publication number:
**WO 2020/180082 (10.09.2020 Gazette 2020/37)**

(54) **REVERSIBLE WATER ELECTROLYSIS SYSTEM AND OPERATION METHOD THEREOF**

SYSTEM ZUR UMKEHRBAREN WASSERELEKTROLYSE UND BETRIEBSVERFAHREN DAFÜR

SYSTÈME D'ÉLECTROLYSE D'EAU RÉVERSIBLE ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2019 KR 20190025901
25.03.2019 KR 20190033833**

(43) Date of publication of application:
**18.08.2021 Bulletin 2021/33**

(73) Proprietor: **Korea Institute of Machinery &
Materials
Daejeon 34103 (KR)**

(72) Inventors:
• **AHN, Kook-Young**
  **Daejeon 34179 (KR)**
• **LEE, Youngduk**
  **Daejeon 35213 (KR)**
• **KIM, Youngsang**
  **Daejeon 34198 (KR)**
• **GIAP, Van Tien**
  **Daejeon 34946 (KR)**

(74) Representative: **Gaunt, Thomas Derrick et al
Lewis Silkin LLP
Arbor
255 Blackfriars Road
London SE1 9AX (GB)**

(56) References cited:
EP-A2- 1 754 270          WO-A2-2015/169940
KR-A- 20140 082 241       KR-A- 20170 002 143
KR-A- 20170 085 179       KR-A- 20180 036 859
KR-B1- 101 925 290        US-A1- 2015 255 813
US-A1- 2016 204 454

**Description**

BACKGROUND

1. Field of Disclosure

The present disclosure of invention relates to a reversible water electrolysis system and an operation method of the reversible water electrolysis system, and more specifically the present disclosure of inventions relates to a reversible water electrolysis system and an operation method of the reversible water electrolysis system, capable of increasing system efficiency via collecting heat energy exhausted in a fuel cell using a catalytic combustor or an ejector.

2. Description of Related Technology

Recently, researches on a generating system using a recycling energy such as a solar cell, a wind power and so on, have been developed. In the generating system using the recycling energy, the output of power is changed according to the circumstances, and thus a spare power over a necessary power should be properly stored and the stored power should be properly used. For example, a water electrolysis system has been developed. When the spare power over the necessary power is generated from the recycling energy generating system, the water electrolysis system is used to generate and to store hydrogen, and then the stored hydrogen is used to provide the power to the fuel cell as the generating power is decreased.

In a reversible water electrolysis system based on a high temperature water electrolysis and fuel cell technology, a heat source is necessary to form an operating circumstance over about 700°C and a high temperature vapor. Thus, in the reversible water electrolysis system, the operating circumstance is necessary to be maintained in the high temperature and an exhausted heat exhausted in the water electrolysis system is necessary to be used more efficiently. Accordingly, the system efficiency of the reversible water electrolysis system may be enhanced.

Related prior art is Korean patent No. 10-0776353. Furthermore, US 2016/204454 discloses a reversible water electrolysis system with water discharge from the exhaust gas.

SUMMARY

The present invention is developed to solve the above-mentioned problems of the related arts. The present invention provides a reversible water electrolysis system capable of increasing system efficiency and capacity using heat energy more efficiently.

In addition, the present invention also provides an operation method of the reversible water electrolysis system.

According to an example embodiment, the reversible water electrolysis system includes a reversible water electrolysis fuel cell, a first exhaust passage, a second exhaust passage, a catalytic combustor and an air-exhaust gas heat exchanger. The reversible water electrolysis fuel cell has a hydrogen pole, an air pole and an electrolyte disposed between the hydrogen pole and the air pole. The reversible water electrolysis fuel cell is configured to be operated at one of a water electrolysis mode and a fuel cell mode. The first exhaust passage is configured to transfer a first exhaust gas exhausted at the hydrogen pole. The second exhaust passage is configure to transfer a second exhaust gas exhausted at the air pole. The catalytic combustor is configured to partially receive the first exhaust gas and to heat the second exhaust gas. The air-exhaust gas heat exchanger is equipped at a downstream side of the catalytic combustor and is configured to exchange a heat between an air supplied to the air pole and the second exhaust gas.

In an example, the catalytic combustor may be configured to be operated at the fuel cell mode and not to be operated at the water electrolysis mode.

In an example, the reversible water electrolysis system may further include a heater configured to heat the air passing through the heat exchanger to a predetermined temperature. The heater may be configured to be operated at the water electrolysis mode and not to be operated at the fuel cell mode.

In an example, the reversible water electrolysis system may further include first and second blowers 51 and 52 connected in parallel with an air supply passage L53 which supplies the air to the heat exchanger 53. An amount of an air supply of the second blower may be larger than that of the first blower. The first blower may be operated at the water electrolysis mode, and the first blower or the second blower may be operated at the fuel cell mode.

In an example, the reversible water electrolysis system may further include a first heat exchanger 41, a steam supply passage L21, a water discharger and a pump. The first heat exchanger 41 may be configured to exchange a heat between a hydrogen supplied to the hydrogen pole and the first exhaust gas. The steam supply passage L21 may be configured to supply a steam to the hydrogen pole. The water discharger may be configured to remove a water from the first exhaust gas. The pump may be equipped to a water discharge passage L43 of the water discharger and may be configured to pump the water outwardly. An operation of the pump may be controlled to maintain a pressure difference between an inlet of the hydrogen pole and an inlet of the air pole within a predetermined range.

In an example, the reversible water electrolysis system may further include a recycling passage L44 configured to at least partially resupply a gas passing through the water discharger to the hydrogen pole as a recycling gas. the gas passing through the water discharger at the water electrolysis mode may be partially supplied as the recycling gas, and the gas passing through the water discharger at the fuel cell mode may be entirely supplied as the recycling gas.

In an example, the reversible water electrolysis system may further include a second heat exchanger 42 configured to exchange a heat between an outer supply water supplied from outside and the first exhaust gas. The outer supply water evaporated as a steam at the second heat exchanger 42 may interflow to the steam supply passage L21.

In an example, the reversible water electrolysis system may further include a third heat exchanger 43 equipped to the recycling passage and configured to exchange a heat between the recycling gas and the first exhaust gas, and a blower 45 disposed at a downstream of the third heat exchanger 43 of the recycling passage.

In an example, the reversible water electrolysis system may further include an ejector 20 disposed at the steam supply passage L21, and a bifurcation passage L22 formed at the steam supply passage L21 and bypassing the ejector. The motive nozzle of the ejector may be connected to a upstream side of the steam supply passage, a diffuser nozzle of the ejector may be connected to a downstream side of the steam supply passage, and a suction port of the ejector may be connected to a feedback passage L47 bifurcated from an exhaust passage of the first exhaust gas.

In an example, a steam may be supplied to the hydrogen pole through the ejector and the recycling passage may be closed at the water electrolysis mode, and the steam may be supplied to the hydrogen pole through the bifurcation passage L22 and the recycling passage may be open at the fuel cell mode.

According to another example embodiment, a reversible water electrolysis system includes a reversible water electrolysis fuel cell 30, a first heat exchanger 41, a steam supply passage L21, a bifurcation passage L22 and an ejector 20. The reversible water electrolysis fuel cell 30 has a hydrogen pole, an air pole and an electrolyte disposed between the hydrogen pole and the air pole, and the reversible water electrolysis fuel cell is configured to be operated at one of a water electrolysis mode and a fuel cell mode. The first heat exchanger 41 is configured to exchange a heat between a hydrogen supplied to the hydrogen pole and a first exhaust gas exhausted at the hydrogen pole. The steam supply passage L21 is configured to supply a steam to the hydrogen pole. The bifurcation passage L22 is formed at the steam supply passage L21. The ejector 20 is disposed at the steam supply passage L21. A motive nozzle of the ejector is connected to a upstream side of the steam supply passage, a diffuser nozzle of the ejector is connected to a downstream side of the steam supply passage, and a suction port of the ejector is connected to a feedback passage L47 bifurcated from an exhaust passage of the first exhaust gas.

In an example, a conflux between the steam supply passage L21 and a hydrogen supply passage L11 supplying the hydrogen to the hydrogen pole may be disposed between the first heat exchanger 41 and the hydrogen pole.

In an example, a steam may be supplied to the hydrogen pole through the steam supply passage L21 at the water electrolysis mode, and the steam may be supplied to the hydrogen pole through the bifurcation passage L22 at the fuel cell mode.

In an example, the reversible water electrolysis system may further include a second heat exchanger 42 configured to exchange a heat between an outer supply water supplied from outside and the first exhaust gas. The outer supply water evaporated as a steam at the second heat exchanger 42 may be supplied to the motive nozzle of the ejector.

In an example, the reversible water electrolysis system may further include a water discharger disposed at a downstream side of the second heat exchanger 42 and configured to remove a water from the first exhaust gas, a recycling passage L44 configured to at least partially resupply a gas passing through the water discharger to the hydrogen pole as a recycling gas, and a third heat exchanger 43 equipped to the recycling passage and configured to exchange a heat between the recycling gas and the first exhaust gas.

In an example, the recycling passage L44 may be closed at the water electrolysis mode, and the recycling passage L44 may be open at the fuel cell mode.

In an example, the reversible water electrolysis system may further include a fourth heat exchanger 44 equipped between the second heat exchanger 42 and the third heat exchanger 43 and configured to exchange a heat between the recycling gas and the first exhaust gas.

In an example, the reversible water electrolysis system may further include a pump 77 equipped at a water discharge passage L43 of the water discharger and configured to pump a water. A pressure of the hydrogen supplied through the hydrogen supply passage L11 and an operation of the pump 77 may be controlled to maintain a pressure difference between an inlet of the hydrogen pole and an inlet of the air pole within a predetermined range.

In an example, the reversible water electrolysis system may further include first and second blowers 51 and 52 connected in parallel with an air supply passage L53 which supplies an air to the air pole, and a fifth heat exchanger 53 configured to exchange a heat between the air supplied to the air pole through the air supply passage L53 and a second exhaust gas exhausted at the air pole. An amount of an air supply of the second blower may be larger than that of the first blower.

According to still another example embodiment, in an operation method of a reversible water electrolysis system, the reversible water electrolysis system is operated at a water electrolysis mode and a fuel cell mode using a reversible water electrolysis fuel cell having a hydrogen pole and an air pole. In the operation method, a heat is exchanged between a first exhaust gas exhausted at the hydrogen pole and a hydrogen supplied to the hydrogen pole. A heat is exchanged between a second exhaust gas exhausted at the air pole and an air supplied to the air pole through one of first and second blowers. Here, an amount of an air supply of the second blower is larger than that of the first blower. The first exhaust gas is partially bifurcated via a bifurcation passage to interflow to the second exhaust gas. The second exhaust gas mixed with the first exhaust gas is heated using a catalytic combustor.

In an example, the bifurcation passage may be controlled to be closed at the water electrolysis mode, and the bifurcation passage may be controlled to be open at the fuel cell mode.

In an example, an operation method may include separating a water from the first exhaust gas exchanged with the hydrogen, discharging the separated water to outside using a drain pump, and at least partially recycling the first exhaust gas from which the water is separated toward the hydrogen pole, as a recycling gas.

In an example, an operation method may include, at the water electrolysis mode, exchanging a heat between the first exhaust gas which is exchanged with the hydrogen and an outer supply water supplied from outside, to evaporate the outer supply water into a steam, and supplying the evaporated outer supply water to the hydrogen pole.

According to still another example embodiment, in an operation method of a reversible water electrolysis system, the reversible water electrolysis system is operated at a water electrolysis mode and a fuel cell mode using a reversible water electrolysis fuel cell having a hydrogen pole and an air pole. In the operation method, a steam is supplied to the hydrogen pole through a steam supply passage L21 at the water electrolysis mode. A steam is supplied to the hydrogen pole through a bifurcation passage L22 via bypassing an ejector disposed at the steam supply passage at the fuel cell mode. An exhaust gas exhausted from the hydrogen pole is at least partially resupplied to the hydrogen pole via the ejector, at the water electrolysis mode.

In an example, an operation method may further include heating a hydrogen supplied to the hydrogen pole at a first heat exchanger 41 at the fuel cell mode. Here, the first heat exchanger 41 may exchange a heat between the exhaust gas exhausted from the hydrogen pole and the hydrogen supplied to the hydrogen pole. A conflux between the steam supply passage L21 and a hydrogen supply passage L11 supplying the hydrogen to the hydrogen pole may be disposed between the first heat exchanger 41 and the hydrogen pole.

In an example, an operation method may further include, at the water electrolysis mode, evaporating an outer supply water into a steam at a second heat exchanger 42, and supplying the steam which is the evaporated outer supply water at the second heat exchanger 42, to a motive nozzle of the ejector. Here, the second heat exchanger 42 may exchange a heat between the exhaust gas and the outer supply water supplied from outside.

In an example, an operation method may further include removing a water from the exhaust gas at a water discharger disposed at a rear side of the first heat exchanger 41, and at least partially resupplying a gas passing through the water discharger to the hydrogen pole as a recycling gas, at the fuel cell mode.

According to the present example embodiments, an exhaust gas from the hydrogen pole is partially used as a fuel of the catalytic combustor so as for heating the exhaust gas of the air pole, so that the temperature of the exhaust gas of the air pole is increased and an increased energy is transmitted to the air. Thus, power consumption of a heat for heating the air supplied to the air pole may be decreased and system efficiency may be increased.

In addition, the water is separated from the exhaust gas exhausted from the hydrogen pole of the fuel cell and then the water is discharged using the drain pump. Here, the operation of the drain pump is properly controlled to maintain a pressure difference between the inlet of the hydrogen pole of the fuel cell and the inlet of the air pole within a predetermined range, so that the fuel cell may be operated stably and more efficiently.

In addition, the exhaust gas exhausted from the hydrogen pole of the fuel cell is partially resupplied to the hydrogen pole using the ejector at the water electrolysis mode, and the exhaust gas is partially recycled and resupplied to the hydrogen pole at the fuel cell mode, so that the system efficiency may be more increased.

BRIEF DESCRIPTION OF THE DRAWINGS

FIG. 1 is a schematic diagram illustrating a reversible water electrolysis system according to a first example embodiment of the present invention;
FIG. 2 is a schematic diagram illustrating a SOEC mode of the reversible water electrolysis system of FIG. 1;
FIG. 3 is a schematic diagram illustrating a SOFC mode of the reversible water electrolysis system of FIG. 1;
FIG. 4 is a schematic diagram illustrating a reversible water electrolysis system according to a second example embodiment of the present invention;
FIG. 5 is a schematic diagram illustrating a SOEC mode of the reversible water electrolysis system of FIG. 4;
FIG. 6 is a schematic diagram illustrating a SOFC mode of the reversible water electrolysis system of FIG. 4;

FIG. 7 is a schematic diagram illustrating a reversible water electrolysis system according to a third example embodiment of the present invention;

FIG. 8 is a schematic diagram illustrating a reversible water electrolysis system according to a fourth example embodiment of the present invention;

FIG. 9 is a schematic diagram illustrating a reversible water electrolysis system according to a fifth example embodiment of the present invention; and

FIG. 10 is a schematic diagram illustrating a reversible water electrolysis system according to a sixth example embodiment of the present invention.

* Reverence numerals

| 10 : | steam generator | 20 : | ejector |
| 30 : | reversible water electrolysis fuel cell | 41, 42, 43, 53 : | heat exchanger |
| 45, 51, 52, 73 : | blower | 57 : | catalytic combustor |
| 61, 62 : | heater | 77 : | drain pump |

## DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein. The invention is described more fully hereinafter with reference to the accompanying drawings, in which embodiments of the invention are shown.

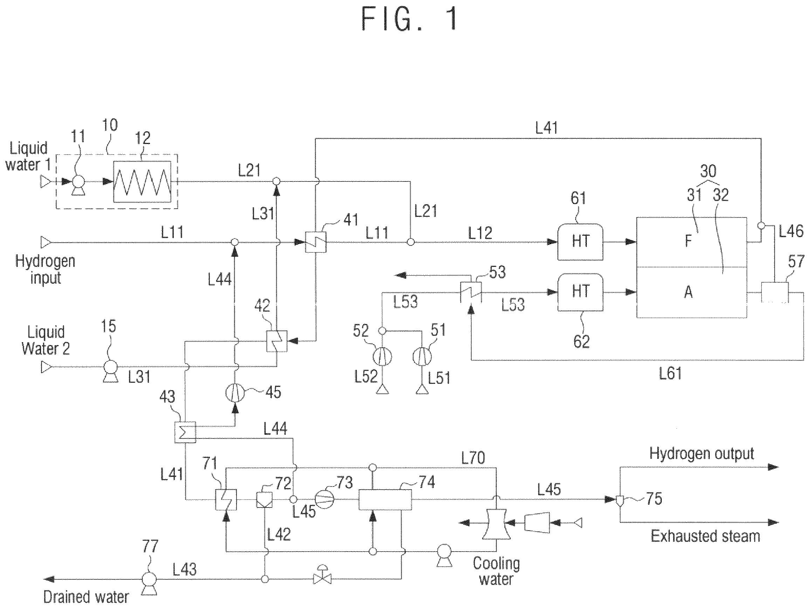

FIG. 1 is a schematic diagram illustrating a reversible water electrolysis system according to a first example embodiment of the present invention.

Referring to FIG. 1, the reversible water electrolysis system according to the present example embodiment includes a steam generator 10, a reversible water electrolysis fuel cell 30, heaters 61 and 62, a plurality of passages connecting the above mentioned elements, a plurality of heat exchangers disposed at the passages, a blower, and a pump.

The reversible water electrolysis fuel cell 30 is operated at one of a water electrolysis mode and a fuel cell mode. At the water electrolysis mode, hydrogen and oxygen are generated using a steam and an electricity provided from outside. At the fuel cell mode, the electricity and a water are generated using a chemical reaction between the hydrogen and the oxygen provided from outside.

The reversible water electrolysis fuel cell 30 may be performed as an arbitrary fuel cell such as solid oxide fuel cell (SOFC), molten carbonate fuel cell (MCFC), and so on. For convenience of explanation, hereinafter, the reversible water electrolysis fuel cell 30 is assumed to be performed as the SOFC.

The reversible water electrolysis fuel cell 30 includes a hydrogen pole 31, an air pole 32 and an electrolyte disposed between the hydrogen pole 31 and the air pole 32.

At the water electrolysis mode (hereinafter, a SOEC mode), a steam $H_2O$ is supplied to the hydrogen pole 31 from outside, and the hydrogen pole 31 generates hydrogen $H_2$. The hydrogen pole 31 receives the steam $H_2O$ via a passage L21 and generates the hydrogen $H_2$, and the hydrogen pole 31 exhausts a gas including the generated hydrogen $H_2$ and the steam $H_2O$ not transformed into the hydrogen $H_2$ via a passage L41, as a first exhaust gas.

At the SOEC mode, the air pole 32 receives the oxygen $O_2$ from the hydrogen pole 31, and transfers the oxygen $O_2$ via a passage L53 using an air supplied from outside. The air pole 32 exhausts a gas including the oxygen $O_2$ and the air

via a passage L61, as a second exhaust gas.

At the fuel cell mode (hereinafter, a SOFC mode), the hydrogen pole 31 generates a water (steam) via a chemical reaction between the hydrogen supplied from the passage L11 and the oxygen supplied from the air pole 32, and the hydrogen pole 31 exhausts a gas including the generated steam and the hydrogen not transformed into the steam, as an exhaust gas.

At the SOFC mode, the air pole 32 receives the air via the passage L53 and supplies the oxygen to the hydrogen pole 31 via the electrolyte. The air pole 32 exhausts nitrogen $N_2$ and the air via the passage L61, as the second exhaust gas.

Theoretically, at the SOEC mode, the water (steam) and the electricity are supplied to the fuel cell 30, and at the SOFC mode, the hydrogen and the oxygen are supplied to the fuel cell 30. However, in an actual operation for the system, to increase the chemical reaction, at each of the SOEC mode and the SOFC mode, the mixed gas including the hydrogen and the steam may be supplied to the fuel cell 30.

Here, at the SOEC mode, the steam is mainly required and thus the mixed gas in which the steam and the hydrogen are mixed by a mass ratio of 80:1 (a volume ratio of about 8.9:1) is supplied to the fuel cell 30. At the SOFC mode, the hydrogen is mainly required and thus the mixed gas in which the hydrogen and the steam are mixed by a mass ratio of 3.6:1 (a volume ratio of about 32:1) is supplied to the fuel cell 30.

The mixed ratio between the steam and the hydrogen may be variously changed at each of the SOEC mode and the SOFC mode. In addition, to control the mixed ratio between the steam and the hydrogen differently according to the selected mode, although not shown in the figure, the blower, the pump or/and a flow control valve may be equipped at at least one of the hydrogen supply passage L11 and the steam supply passage L21 to control an amount of the supplied hydrogen or/and an amount of the supplied steam.

In the present example embodiment, the hydrogen is supplied to the fuel cell 30 via the hydrogen supply passage L11. For example, the hydrogen supply passage L11 may be connected to a hydrogen storage tank (not shown). The hydrogen flowed into the hydrogen supply passage L11 is heated at a first heat exchanger 41.

The first heat exchanger 41 exchanges a heat between the hydrogen supplied to the hydrogen pole 31 of the fuel cell 30 and the exhaust gas exhausted from the hydrogen pole 31. Here, the hydrogen supplied to the hydrogen pole 31 may be at a room temperature or a temperature between 35°C and 45°C. The exhaust gas exhausted from the hydrogen pole 31 may be at a temperature between 700°C and 750°C. The hydrogen supplied to the hydrogen pole 31 may be heated into a temperature of about 650°C or more, at the first heat exchanger 41.

The steam is supplied to the fuel cell 30 via the steam supply passage L21. The steam generator 10 connected to the steam supply passage L21, may include a pump 11 and a boiler 12. The pump 11 heats the water supplied to the boiler 12 to generate the steam. Here, the boiler 12 may be performed as the conventional combustion device or incinerator such as a boiler system, a cogeneration system, a combined power generation system, a waste incineration system and so on.

The reversible water electrolysis system according to the present example embodiment may further include a water supply passage L31, a pump 15 equipped at the water supply passage L31, and a second heat exchanger 42 equipped at the water supply passage L31. The water supply passage L31 receives the water from an outside of the system, and hereinafter, the receive water from the outside is called as an outer supply water.

The second heat exchanger 42 exchanges a heat between the outer supply water supplied to the passage L31 and the exhaust gas exhausted from the hydrogen pole 31, and the second heat exchanger 42 may be disposed at a downstream of the first heat exchanger 41 from a view point of a flow of the exhaust gas.

Here, the outer supply water may be at a temperature between a room temperature and 45°C. The exhaust gas supplied to the second heat exchanger 42 may be at a temperature between 600°C and 700°C. The outer supply water may be evaporated and heated into a temperature of about 600°C or more, at the second heat exchanger 42. The steam evaporated at the second heat exchanger 42 interflows to the steam supply passage L21, and then is supplied to the hydrogen pole 31 via the passages L21 and L12.

Accordingly, the water supply passage L31 receiving the water from outside and the second heat exchanger 42 are further included, and thus a waste heat recovery rate for the exhaust gas exhausted from the hydrogen pole may be more increased.

Without the water supply passage L31 and the second heat exchanger 42, the exhaust gas at the exhaust passage L41 is maintained with a relatively high temperature after the exhaust gas passes through the first heat exchanger 41 and a third heat exchanger 43 mentioned below. Here, for example, at the SOEC mode, the exhaust gas passing through the third heat exchanger 43 may be at the temperature of 600°C or more. However, in the present example embodiment, the exhaust gas of the exhaust passage L41 heats the outer supply water at the second heat exchanger 42, so that the exhaust gas passing through the third heat exchanger 43 may be cooled down to the temperature between 100°C and 150°C. Thus, the waste heat recovery rate for the exhaust gas may be more increased.

The steam supply passage L21 interflows to the hydrogen supply passage L11, and the mixed gas of the hydrogen and the steam is supplied to the hydrogen pole 31 of the fuel cell 30 via the mixed gas supply passage L12.

From a view point of the hydrogen supply passage L11, a conflux between the steam supply passage L21 and the hydrogen supply passage L11 is disposed at a downstream side of the first heat exchanger 41, in other words, between the first heat exchanger 41 and the hydrogen pole 31. Thus, the high temperature exhaust gas exhausted from the hydrogen pole 31 does not reheat the steam which is already heated into the relatively high temperature, and only heats the hydrogen at the first heat exchanger 41, so that the hydrogen may be more efficiently heated with the relatively high temperature, compared to the heating of the mixed gas of the hydrogen and the steam.

The reversible water electrolysis system according to the present example embodiment may further include a first heater 61. The first heater 61 is disposed adjacent to an inlet of the hydrogen pole 31 and is disposed at the mixed gas supply passage L12. The first heater 61 heats the mixed gas of the hydrogen and the steam to be a predetermined range of temperature, so as for the fuel cell 30 to be operated with an optimized efficiency at both of the SOEC mode and the SOFC mode. For example, the first heater 61 may heat the mixed gas of the hydrogen and the steam to be the temperature between 650°C and 750°C. In addition, although not shown in the figure, to control the above heating temperature, at least one temperature sensor may be disposed at an inside, a front side or a rear side of the first heater 61 to measure the temperature of the mixed gas, and the mixed gas may be heated based on the measured temperature.

The reversible water electrolysis system according to the present example embodiment may further include an air supply passage L53 and an air-exhaust gas heat exchanger 53 disposed at the air supply passage L53. An air is supplied from outside to the air pole 32 via the air supply passage L53. The air-exhaust gas heat exchanger 53 exchanges a heat between the air supplied to the air pole 32 via the air supply passage L53 and the exhaust gas exhausted from the air pole 32 and transferred to the exhaust passage L61.

A second heater 62 may be equipped at the air supply passage L53. The second heater 62 is disposed adjacent to the air pole 32 and is disposed at the air supply passage L53. The second heater 62 heats the air into a predetermined range of temperature, so as for the fuel cell 30 to be operated with the optimized efficiency. For example, the heat exchanger 53 may heat the air of room temperature into a temperature between 650°C and 700°C, and then the second heater 62 may heat the heated air into a temperature between 700°C and 750°C. Then, the air may be supplied to the air pole 32.

In the present example embodiment, a first bifurcation passage L51 and a second bifurcation passage L52 which are connected in parallel, are connected to an upstream of the air supply passage L53. A first blower 51 is equipped to the first bifurcation passage L51, and a second blower 52 is equipped to the second bifurcation passage L52.

An amount of air transferred via the second bifurcation passage L52 is larger than that via the first bifurcation passage L51. For example, a diameter of a conduit of the second bifurcation passage L52 may be larger than that of the first bifurcation passage L 51, and thus the second blower 52 supplies the air more than the first blower 51. Here, the amount of the air via the second bifurcation passage L52 may be larger than that via the first bifurcation passage L51, by five to fifteen times.

At the SOEC mode, the water (steam) and the electricity are necessary larger than the air, but at the SOFC mode, the hydrogen and the oxygen (air) are necessary larger than the water and the electricity. Thus, at the SOEC mode, the first blower 51 is only operated and the second blower 52 is not operated. However, at the SOFC mode, the second blower 52 is only operated and the first blower 51 is not operated. Alternatively, at the SOFC mode, both of the first and second blowers 51 and 52 may be operated.

The exhaust gas exhausted at the hydrogen pole 31 of the fuel cell 30 is exhausted to outside via the exhaust passage L41. Here, a bifurcation passage L46 and a catalytic combustor 57 may be further included. The bifurcation passage L46 partially transfers the exhaust gas at the exhaust passage L41 of the hydrogen pole to the exhaust passage L61 of the air pole, and the catalytic combustor 57 is equipped at the conflux between the bifurcation passage L46 and the exhaust passage L61.

The catalytic combustor 57 induces the exhaust gas exhausted from the air pole 32 and the exhaust gas of the hydrogen pole bifurcated via the bifurcation passage L46, to pass through a carrier carrying a metal or a metal oxide catalyst.

At the SOFC mode, a small amount of hydrogen of the exhaust gas exhausted from the hydrogen pole 31 is functioned as a fuel at the catalytic combustor 57, to heat the air exhausted from the air pole 32, and thus the temperature of the exhaust gas of the air pole 32 is increased by about 20°C to 30°C.

For example, without the catalytic combustor 57, the temperature of the exhaust gas exhausted from the air pole 32 may be about 750°C, but with the catalytic combustor 57, the temperature of the exhaust gas passing through the catalytic combustor 57 may be heated to a temperature between 770°C and 780°C.

Accordingly, the exhaust gas is additionally heated and thus more increased heat energy may be provided to the air of the air passage L53 at the air-exhaust gas heat exchanger 53, so that the second heater 62 may not be operated. The specific temperatures mentioned at the above explanation may be examples, and the specific temperature or the specific range of the temperature may be variously changed.

In the present example embodiment, at the SOFC mode at which the air is required, the catalytic combustor 57 is used, but at the SOEC mode, the catalytic combustor 57 may not be used. Thus, an on-off valve (not shown) may be equipped to the bifurcation passage L46, and the valve may be open at the SOFC mode and closed at the SOEC mode.

The remaining exhaust gas which is exhausted from the hydrogen pole 31 but is not bifurcated into the bifurcation passage L46, sequentially passes through the first heat exchanger 41 to the third heat exchanger 43. At the first heat exchanger 41, the exhaust gas transmits the heat energy to the hydrogen supplied to the hydrogen pole 31 via the hydrogen supply passage L11, to heat the hydrogen. At the second heat exchanger 42, the exhaust gas transmits the heat energy to the water supplied from outside via the water supply passage L13, to heat the water.

The exhaust gas passing through the second heat exchanger 42 is transferred to the water discharger. The water discharger separates the water from the exhaust gas. In the present example embodiment, the water discharger may include a pump, a cooling device and so on which is equipped to a circulation passage L70 of a refrigerant passing through and circulating a condenser 71 and a drain 72.

The water of the exhaust gas is condensed at the condenser 72, and the condensed water is discharged to outside via the water discharge passage L42 and L43 at the drain 72. The remaining gas (hydrogen and steam) not condensed to the water is transferred via the passage L45, and is separated into the hydrogen and the steam via a blower 73, a compressor 74 and a hydrogen separator 75, and then each of the hydrogen and the steam is individually treated or stored.

The water discharger illustrated in the figure is an example, and thus the method for separating and discharging the water from the exhaust gas, the method for extracting the hydrogen, and the devices for performing the methods may be variously changed.

In the present example embodiment, the gas passing through the drain 72 and transferring via the passage L45 is at least partially bifurcated by the recycling passage L44. The recycling passage L44 is connected to the hydrogen supply passage L11, and thus the gas bifurcated via the recycling passage L44 may be resupplied to the hydrogen pole 31 as a recycling gas.

The third heat exchanger 43 and the blower 45 may be equipped at the recycling passage L44. Here, the third heat exchanger 43 and the blower 45 are sequentially equipped from the upstream of the recycling passage L44 to the downstream of the recycling passage L44.

The third heat exchanger 43 exchanges a heat between the exhaust gas of the exhaust passage L41 and the recycling gas of the recycling passage L44, to heat the recycling gas. In the present example embodiment, the third heat exchanger 43 may be a mini heat exchanger for increasing the temperature of the recycling gas to prevent the recycling gas from being condensed. The recycling gas bifurcated into the recycling passage L44 is saturated, and thus the devices like the blower 45 may be damaged if even a little recycling gas is condensed due to the circumstances of the recycling passage L44. In addition, the durability of the devices like the blower 45 may be decreased if the recycling gas is heated too much at the third heat exchanger 43.

Thus, in the present example embodiment, the mini third heat exchanger 43 is equipped at a front (upstream) of the blower 45, to increase the temperature of the recycling gas slightly and to be transferred to the blower 45. The increased temperature of the recycling gas increased by the third heat exchanger 43 may depend on the amount of the recycling gas. For example, the temperature of the recycling gas may be increased within a range between about 5°C and 30°C.

The recycling gas sequentially passing through the third heat exchanger 43 and the blower 45 interflows at the hydrogen supply passage L11, and is heated to be a relatively high temperature with the hydrogen at the first heat exchanger 41, and then is supplied to the hydrogen pole 31 of the fuel cell 30.

In the present example embodiment, the reversible water electrolysis system may further include a drain pump 77 equipped at the water discharge passage L43. The drain pump 77 forces to pump the water discharged via the passage L42 at the drain 72, to discharge the water to outside.

As the drain pump 77 is equipped to the water discharge passage L43, the pressure difference between the inlet of the hydrogen pole 31 and the inlet of the air pole 32 is removed or decreased within a predetermined range.

As the pressure difference between the inlet of the hydrogen pole 31 and the inlet of the air pole 32 is decreased, the fuel cell system may be operated more stably and more efficiently. However, in the conventional fuel cell system, many passages or heat exchanges are equipped at the inlet and the outlet of the hydrogen pole 31 compared to the air pole 32, and thus the pressure of the hydrogen pole 31 is more increased. In contrast, in the present example embodiment, as the drain pump 77 is operated, the absorbing force of the pump 77 is applied to the hydrogen pole 31 via the exhaust passage L41 of the hydrogen pole 31, and thus the pressure at the inlet of the hydrogen pole 31 may be decreased.

Thus, to control the operation of the pump 77, the pressure of the inlet of the hydrogen pole 31 is maintained to be substantially same as or be in a predetermined range with that of the inlet of the air pole 32, so that the system may be stably and efficiently operated.

In addition, as the pressure of the inlet of the hydrogen pole 31 is decreased, the capacity of the pump or the blower for transferring the hydrogen to the hydrogen pole 31 via the hydrogen supply passage L11 may be decreased. In addition, even though the pressure inside of the exhaust passage L41 is decreased to be lower than an atmospheric pressure, the water is prevented from flowing back to the exhaust passage L41 since the pump 77 forces to discharge the water.

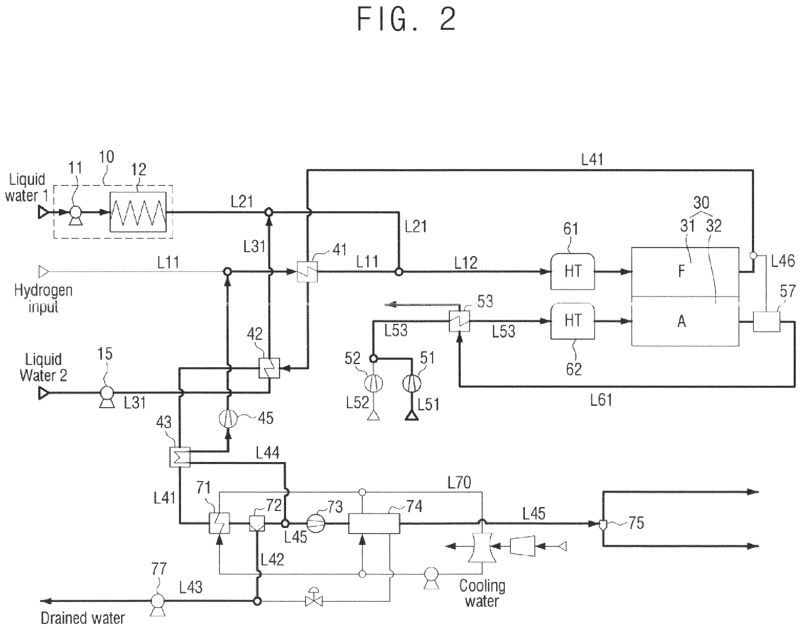

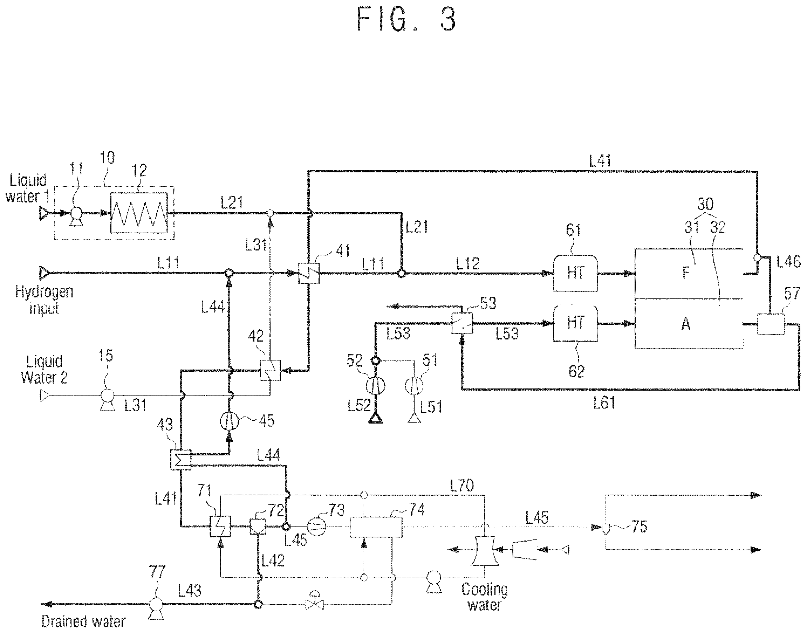

Hereinafter, referring to FIG. 2 and FIG. 3, the SOEC mode and the SEFC mode of the reversible water electrolysis system according to the first example embodiment are explained.

FIG. 2 is a schematic diagram illustrating a SOEC mode of the reversible water electrolysis system of FIG. 1. In FIG. 2, the passages used at the SOEC mode are illustrated as a bold line.

Referring to FIG. 2, at the SOEC mode, the steam generated at the steam generator 10 is supplied via the steam supply passage L21, and at the same time, the outer supply water is supplied via the water supply passage L31. The outer supply water is evaporated to be a high temperature steam at the second heat exchanger 42, and interflows at the steam supply passage L21, and then the interflowed steam is supplied to the hydrogen pole 31 via the passages L21 and L12.

At the SOEC mode, a small amount of hydrogen is necessary, and thus additional hydrogen is not supplied via the hydrogen supply passage L11, but at the initial time, the hydrogen may be supplied a little. In addition, a small amount of air is necessary, and thus the first blower 51 is operated and the second blower 52 is not operated.

As the water electrolysis reaction occurs at the fuel cell 30, the first exhaust gas including the hydrogen and the steam is exhausted from the hydrogen pole 31 to the exhaust passage L41, and the second exhaust gas including the oxygen and the air is exhausted from the air pole 32 to the exhaust passage L61.

At the SOEC mode, the catalytic combustor 57 is unnecessary, and the first exhaust gas exhausted to the exhaust passage L41 sequentially heats the downstream recycling gas, the outer supply water and the upstream recycling gas, with sequentially passing through the first heat exchanger 41, the second heat exchanger 42 and the third heat exchanger 43, and then the first exhaust gas is transferred to the water discharger. At the water discharger, the steam of the first exhaust gas is condensed to be discharged to outside via the water discharge passage L43, and the mixed gas of the hydrogen and the uncondensed steam is partially resupplied to the hydrogen pole 31 via the recycling passage L44 as the recycling gas, and then the remaining gas of the mixed gas is transferred via the exhaust passage L45 to be separated and treated.

A ratio of the amount of the mixed gas bifurcated into each of the recycling passage L44 and the exhaust passage L45 may be variously changed, and for example, the ratio may be 1:3 to 1:5. That is, the ratio of the amount of the mixed gas flowed to the recycling passage L44 and that flowed to the exhaust passage L45 may be 1:3 to 1:5.

FIG. 3 is a schematic diagram illustrating a SOFC mode of the reversible water electrolysis system of FIG. 1. In FIG. 3, the passages used at the SOFC mode are illustrated as a bold line.

Referring to FIG. 3, at the SOFC mode, the hydrogen is supplied via the hydrogen supply passage L11 and a small amount of steam is supplied via the steam supply passage L21. Here, a small amount of steam is necessary, and thus the outer supply water is not supplied.

The hydrogen is heat-exchanged with the exhaust gas of the exhaust passage L41 at the first heat exchanger 41, and the hydrogen is heated and mixed with the steam. Then, the mixed gas of the steam and the hydrogen is supplied to the hydrogen pole 31 via the mixed passage L12.

At the SOFC mode, a large amount of air is necessary, and thus the second blower 52 is operated to supply the air to the air pole 32 and the first blower 51 is not operated. Alternatively, both of the first and second blowers 51 and 52 may be operated.

At the SOFC mode, the catalytic combustor 57 may be used. A small amount of hydrogen of the exhaust gas exhausted from the hydrogen pole 31 is bifurcated into the bifurcation passage L45 to be supplied to the catalytic combustor 57, and then is functioned as a fuel at the catalytic combustor 57 to heat the air exhausted from the air pole 32. Thus, the temperature of the exhaust gas of the air pole 32 may be increased by about 20°C to about 30°C.

For example, without using the catalytic combustor 57, the temperature of the exhaust gas exhausted from the air pole 32 may be about 750°C, but with using the catalytic combustor 57, the exhaust gas passing through the catalytic combustor 57 may be heated to be a temperature between 770°C and 780°C. Thus, the additionally heated exhaust gas may transmit the heat energy more to the air of the air passage L53 at the air-exhaust gas heat exchanger 53, so that the second heater 62 is not to be operated. Here, the temperature mentioned above is an example and thus may be variously changed.

The exhaust gas exhausted from the hydrogen pole 31 heats the recycling gas at the first and third heat exchanger 41 and 43, and then is transferred to the water discharger. Then, the steam is condensed in the exhaust gas and the condensed steam is discharged to outside via the water discharge passage L43, and the mixed gas of the hydrogen and the uncondensed steam is resupplied to the hydrogen pole 31 via the recycling passage L44 as the recycling gas.

According to the first example embodiment referring to FIGS. 1 to 3, the properly mixed gas of hydrogen and steam is supplied to the fuel cell 30 according to each operating mode of the reversible water electrolysis system.

For example, at the SOEC mode, a relatively small amount of hydrogen is necessary, and thus the exhaust gas exhausted to the exhaust passage L41 is partially bifurcated into the recycling passage L44, and the hydrogen included in the recycling gas feedback through the recycling passage L44 is used. Thus, the hydrogen is unnecessary to be additionally supplied from outside to the hydrogen supply passage L11, and the air is merely supplied by only operating the first blower 51 which is relatively mini size since a relatively small amount of air is also necessary. In contrast, at the SOFC mode, the remaining exhaust gas except for the condensed water of the exhaust gas exhausted to the exhaust passage L41 is resupplied via the recycling passage L44 as the recycling gas, so that the hydrogen not reacted and wasted at the fuel cell 30 may be minimized.

In addition, the operation of the pump 77 is controlled at each of the SOEC mode and the SOFC mode, to maintain the pressure of the inlet of the hydrogen pole 31 and the pressure of the inlet of the air pole 32 to be substantially same with each other or to be in a predetermined range, so that the system may be operated more stably and more efficiently. In addition, the third heat exchanger 43 is equipped at the upstream side of the blower 45 of the recycling passage L44, and thus the blower 45 may be prevented from being damaged due to the condense of the steam inside of the recycling passage L44.

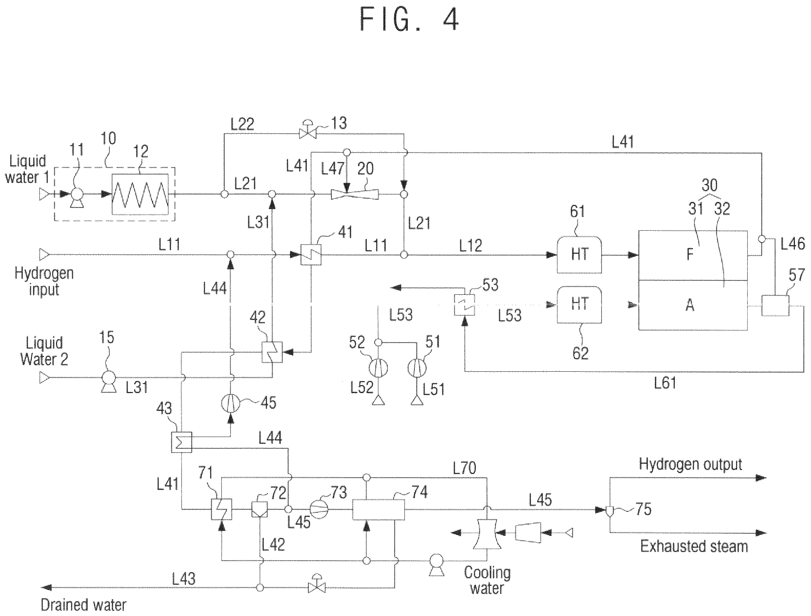

FIG. 4 is a schematic diagram illustrating a reversible water electrolysis system according to a second example embodiment of the present invention.

The reversible water electrolysis system according to the present example embodiment is substantially same as the reversible water electrolysis system in FIG. 1 except that an ejector 20 equipped at a steam supply passage L21 and a bifurcation passage L22 bifurcated from the steam supply passage are further included, and the pump 77 in FIG. 1 is omitted in the water discharge passage L43, and thus same references are used for the same elements and any repetitive explanation will be omitted.

Referring to FIG. 4, in the reversible water electrolysis system according to the present example embodiment, the steam supply passage L21 includes the bifurcation passage L22. As illustrated in FIG. 4, the bifurcation passage L22 is bifurcated from the steam supply passage L21 and interflows to the passage L21 again. An on-off valve 13 may be equipped at the bifurcation passage L22, and although not shown in the figure, the on-off valve may be also equipped to the steam supply passage L21. The steam may be controlled to be flowed into one of the steam supply passage L21 and the bifurcation passage L22, by controlling the on-off valve. Alternatively, a 3-way valve may be equipped at a bifurcation point at which the bifurcation passage L22 is formed, to control the flow of the steam.

The ejector 20 is equipped at the steam supply passage L21, and is arranged in parallel with the bifurcation passage L22. Here, the steam from the steam generator 10 may be transferred to the hydrogen pole 31 via the ejector 20, or may be transferred to the hydrogen pole 31 via the bifurcation passage L22 with bypassing the ejector 20.

The ejector 20 mixes a fluid using Venturi effect, and the fluid to be mixed is injected to a venturi tube having a diameter gradually decreased and expanded. Normally, an inlet of the ejector 20 is called as a motive nozzle, an outlet of the ejector 20 is called as a diffuser nozzle, and an injecting port through which the fluid is injected is called as a suction port. In the present example embodiment as illustrated in the figure, the motive nozzle of the ejector 20 is connected to an upstream side of the steam supply passage L21, the diffuser nozzle of the ejector 20 is connected to a downstream side of the steam supply passage L21, and the suction port of the ejector 20 is connected to a feedback passage L47. The feedback passage L47 is bifurcated from the exhaust passage L41 at which the exhaust gas of the hydrogen pole 31 flows.

Normally, at the SOEC mode, a volume ratio between the steam and the hydrogen injected to the hydrogen pole 31 is about 9:1. In the exhaust gas exhausted from the hydrogen pole 31, the amount of the hydrogen is relatively large, and thus the hydrogen is unnecessary to be additionally supplied via the hydrogen supply passage L11 if the recycling gas is partially recycled via the feedback passage L47. Here, the ejector 20 controls the pressure or the amount of the steam supplied to the motive nozzle (transferred via the passage L21), to control the amount of the exhaust gas recycled to the feedback passage L47.

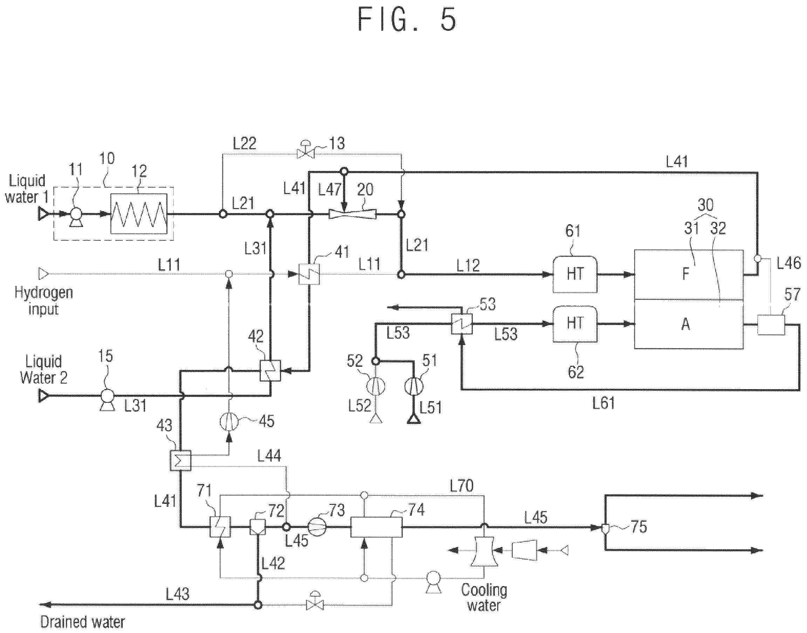

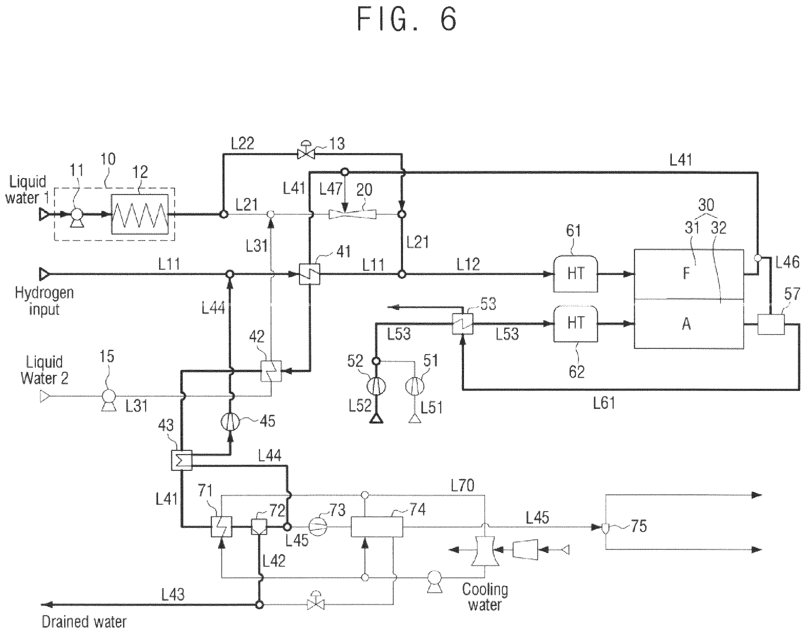

Hereinafter, referring to FIG. 5 and FIG. 6, the SOEC mode and the SEFC mode of the reversible water electrolysis system according to the second example embodiment are explained.

FIG. 5 is a schematic diagram illustrating a SOEC mode of the reversible water electrolysis system of FIG. 4. In FIG. 5, the passages used at the SOEC mode are illustrated as a bold line.

Referring to FIG. 5, at the SOEC mode, the steam is supplied via the steam supply passage L21. The outer supply water is supplied via the water supply passage L31 and the outer supply water is evaporated at the second heat exchanger 4, and then the evaporated water interflows to the steam supply passage L21. The mixed steam passes through the ejector 20, and here, the exhaust gas exhausting via the exhaust passage L41 is partially flowed into the ejector 20 via the feedback passage L47 to be mixed with the steam. The above mixed gas is supplied to the hydrogen pole 31 of the fuel cell 30 via the passage L12. At the SOEC mode, relatively a small amount of air is necessary, and thus the first blower 51 is operated to supply the air to the air pole 32 of the fuel cell 30 and the second blower 52 is not operated.

As the water electrolysis reaction occurs at the fuel cell 30, the first exhaust gas including the hydrogen and the steam is exhausted from the hydrogen pole 31 via the exhaust passage L41, and the second exhaust gas including the oxygen and the air is exhausted from the air pole 32 via the exhaust passage L61.

At the SOEC mode, the catalytic combustor 57 may not be used, and the first exhaust gas exhausting to the exhaust passage L41 is partially bifurcated at the feedback passage L47 and then is supplied to the suction port of the ejector 20. The remaining exhaust gas passes through the first heat exchanger 41 without the heat exchanging, and transmits the heat energy at the outer supply water at the second heat exchanger 42.

In the present example embodiment, at the SOEC mode, the recycling passage L44 is closed, and thus the exhaust gas of the exhaust passage L41 passes through the third heat exchange 43 without the heat exchanging and then is transferred to the water discharger. At the water discharger, the steam is condensed to be discharged to outside via the water discharge passage L43, and the hydrogen and the steam which is not condensed are transferred via the passage L45. Then, the hydrogen and the uncondensed steam are separately treated.

FIG. 6 is a schematic diagram illustrating a SOFC mode of the reversible water electrolysis system of FIG. 4. In FIG. 6, the passages used at the SOFC mode are illustrated as a bold line.

Referring to FIG. 6, at the SOFC mode, the hydrogen is supplied via the hydrogen supply passage L11, and a small amount of steam is supplied via the steam supply passage L21. The hydrogen is heat-exchanged with the exhaust gas of the exhaust passage L41 at the first heat exchanger 41 to be heated and then is supplied to the hydrogen pole 31. The steam is transferred via the bifurcation passage L22 by bypassing the ejector 20, interflows to the hydrogen, and then is supplied to the hydrogen pole 31. At the SOFC mode, relatively large amount of air is necessary, so that the second blower 52 is operated to supply the air to the air pole 32 and the first blower 51 is not operated. Alternatively, both of the first and second blowers 51 and 52 may be operated.

In the present example embodiment, at the SOFC mode, the catalytic combustor 57 is operated. The exhaust gas exhausted from the hydrogen pole 31 is partially supplied to the catalytic combustor 57 via the bifurcation passage L45 to be a fuel of the catalytic combustor 57, and the air exhausted from the air pole 32 is heated. The catalytic combustor 57 may increase the temperature of the exhaust gas of the air pole 32 by about 20°C to 30°C. Thus, the additionally heated exhaust gas may transmit the heat energy to the air of the air passage L53 more at the air-exhaust gas heat exchanger 53, so that the second heater 62 may not to be operated.

As the chemical reaction between the hydrogen and the oxygen occurs at the fuel cell 30, the first exhaust gas including the steam and the hydrogen is exhausted from the hydrogen pole 31 via the exhaust passage L41, and the second exhaust gas including the nitrogen and the air is exhausted from the air pole 32 via the exhaust passage L61.

The first exhaust gas heats the hydrogen with passing through the first heat exchanger 41. At the SOEC mode, since the outer supply water is not supplied, the first exhaust gas passes through the second heat exchanger 42 without the heat exchanging, and the first exhaust gas is heat-exchanged with the recycling gas at the third heat exchanger 43 to heat the recycling gas. Then, the first exhaust gas is transferred to the water discharger, and the steam is condensed to be discharged via the water discharge passage L43. Here, the hydrogen and the uncondensed steam are resupplied to the hydrogen pole 31 via the recycling passage L44 as the recycling gas.

Accordingly, in the second example embodiment, the mixed gas of the hydrogen and the steam is properly supplied to the fuel cell 30 according to each of the SOEC mode and the SOFC mode.

For example, at the SOEC mode, relatively a small amount of hydrogen is necessary, and thus the hydrogen included in the exhaust gas fed-back via the feedback passage L47 is used. Thus, the hydrogen is unnecessary to be supplied from outside via the hydrogen supply passage L11. In addition, relatively a small amount of air is also necessary, and thus the first blower 51 which is a relatively small size is only operated to supply the air. In contrast, at the SOFC mode, the exhaust gas is resupplied via the recycling passage L44 not via the feedback passage L47, so that the hydrogen which is not reacted at the fuel cell 30 and is wasted is minimized. In addition, the steam is supplied by bypassing the ejector 20, so that the ejector 20 is prevented from being interfered, and the third heat exchanger 43 is equipped at the upstream side of the blower 45 of the recycling passage L44 to prevent the blower 45 from being damage.

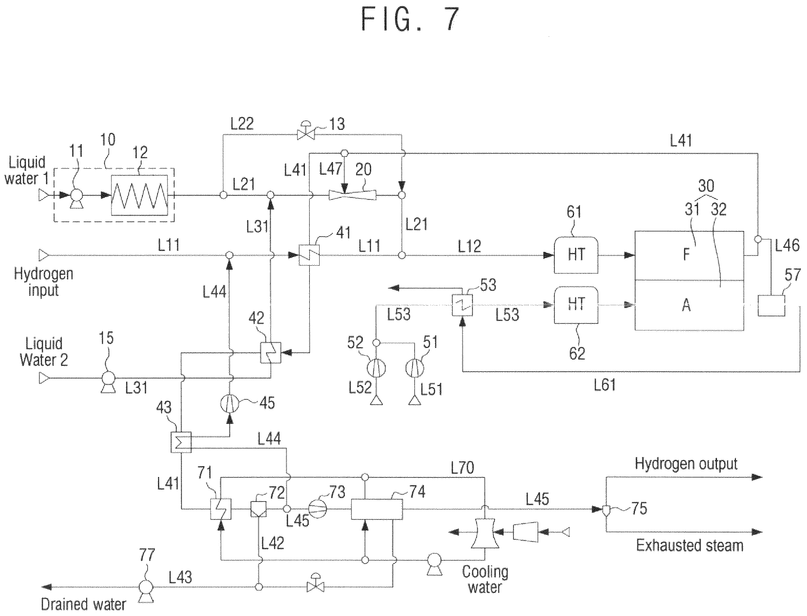

FIG. 7 is a schematic diagram illustrating a reversible water electrolysis system according to a third example embodiment of the present invention.

The reversible water electrolysis system according to the present example embodiment is substantially same as the reversible water electrolysis systems in FIG. 1 and in FIG. 4 except that the ejector 20 and the drain pump 77 are included.

Likewise the reversible water electrolysis system in FIG. 4, the ejector 20 is equipped at the steam supply passage L21, and the bifurcation passage L22 bypassing the ejector 20 is connected to the ejector 20 in parallel.

In addition, likewise the reversible water electrolysis system in FIG. 1, the drain pump 77 is equipped at the water discharge passage L43, and forces to pump the water discharged via the passage L42 at the drain 72 so as to discharge the water to outside. The effects of the ejector 20 and the drain pump 77 are explained above in detail, and thus any repetitive explanation will be omitted.

Further, other elements for the reversible water electrolysis system according to the present example embodiment are substantially same as explained above referring to FIG. 1 and FIG. 4, and any repetitive explanation will be omitted.

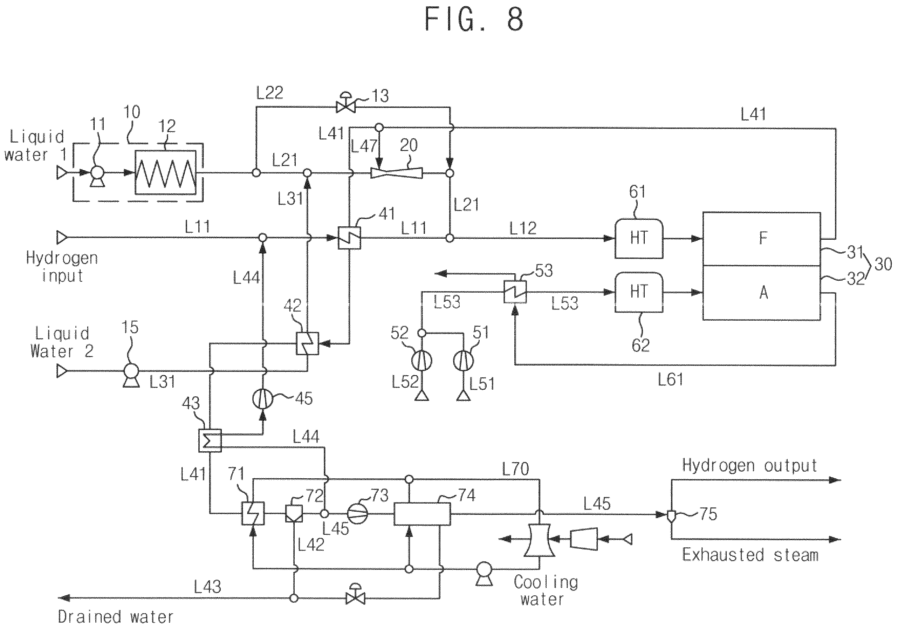

FIG. 8 is a schematic diagram illustrating a reversible water electrolysis system according to a fourth example embodiment of the present invention.

The reversible water electrolysis system according to the present example embodiment is substantially same as the reversible water electrolysis system in FIG. 4 except that the catalytic combustor 57 is omitted and the bifurcation passage L46 connected to the catalytic combustor 57 is omitted, and thus same reference numerals are used for the same elements and any repetitive explanation will be omitted.

Referring to FIG. 8, in the reversible water electrolysis system according to the present example embodiment, the exhaust gas exhausted from the hydrogen pole 31 of the fuel cell 30 is exhausted to outside via the exhaust gas L41. Here, the first and second heat exchangers 41 and 42 are sequentially equipped at the exhaust passage L41. At the first heat exchanger 41, the exhaust gas transmits the heat energy to the hydrogen supplied to the hydrogen pole 31 via the hydrogen supply passage L11, to heat the hydrogen. A the second heat exchanger 42, the exhaust gas evaporates and heats the outer supply water supplied via the second steam supply passage L31, as already explained above.

In addition, the exhaust gas transferring via the exhaust passage L41 is transferred to the water discharger, and the next discharge is the same as explained above.

The air pole 32 receives the air via the passage L53, transfers the oxygen to the hydrogen pole 31 via the electrolyte, and exhausts the nitrogen and the air via the passage L61 as the second exhaust gas.

At the SOEC mode, as the water electrolysis reaction occurs at the fuel cell 30, the first exhaust gas including the hydrogen and the steam is exhausted from the hydrogen pole 31 via the exhaust passage L41, and the second exhaust gas including the oxygen and the air is exhausted from the air pole 32 via the exhaust passage L61.

Alternatively, at the SOFC mode, as the chemical reaction of the hydrogen and the oxygen occurs at the fuel cell 30, the first exhaust gas including the steam and the hydrogen is exhausted from the hydrogen pole 31 via the exhaust passage L41, and the second exhaust gas including the nitrogen and the oxygen is exhausted from the air pole 32 via the exhaust passage L61.

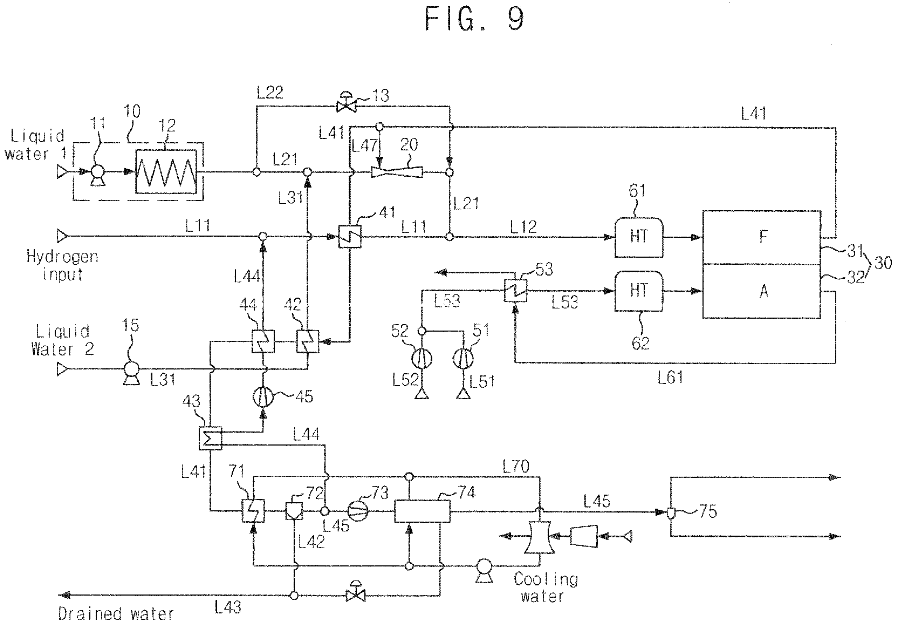

FIG. 9 is a schematic diagram illustrating a reversible water electrolysis system according to a fifth example embodiment of the present invention.

The reversible water electrolysis system according to the present example embodiment is substantially same as the reversible water electrolysis system in FIG. 8 except that a fourth heat exchanger 44 is additionally equipped at the recycling passage L44, and thus same reference numerals are used for the same elements and any repetitive explanation will be omitted.

Referring to FIG. 9, in the reversible water electrolysis system according to the present example embodiment, the fourth heat exchanger 44 exchanges the heat between the recycling gas and the first exhaust gas, to heat the recycling gas. In the view point of the recycling passage L44, the fourth heat exchanger 44 is disposed at the downstream side of the blower 45, and in the view point of the exhaust passage L41, the fourth heat exchanger 44 is disposed between the second heat exchanger 42 and the third heat exchanger 43.

In the present example, the third heat exchanger 43 is a relatively small size heat exchanger and increases the temperature of the recycling gas by about 5°C to 20°C, and the fourth heat exchanger 44 may heat the recycling gas by at least more than about 200°C. For example, when the temperature of the recycling gas bifurcated to the recycling passage L44 is between 30°C and 40°C, the third heat exchanger 43 may heat the recycling gas to be the temperature between 40°C and 60°C to prevent the recycling gas from being condensed, and the fourth heat exchanger 44 may heat the recycling gas to be the temperature between 250°C and 300°C.

Accordingly, the heat energy of the exhaust gas exhausted from the first heat exchanger 41 is used again at the fourth heat exchanger 44 for heating the recycling gas, so that the waste heat may be recollected. In addition, the recycling gas once heated at the fourth heat exchanger 44 is mixed with the hydrogen and then is heated again at the first heat exchanger 41, so that the temperature of the mixed gas flowing in the mixed gas passage L12 may be increased more.

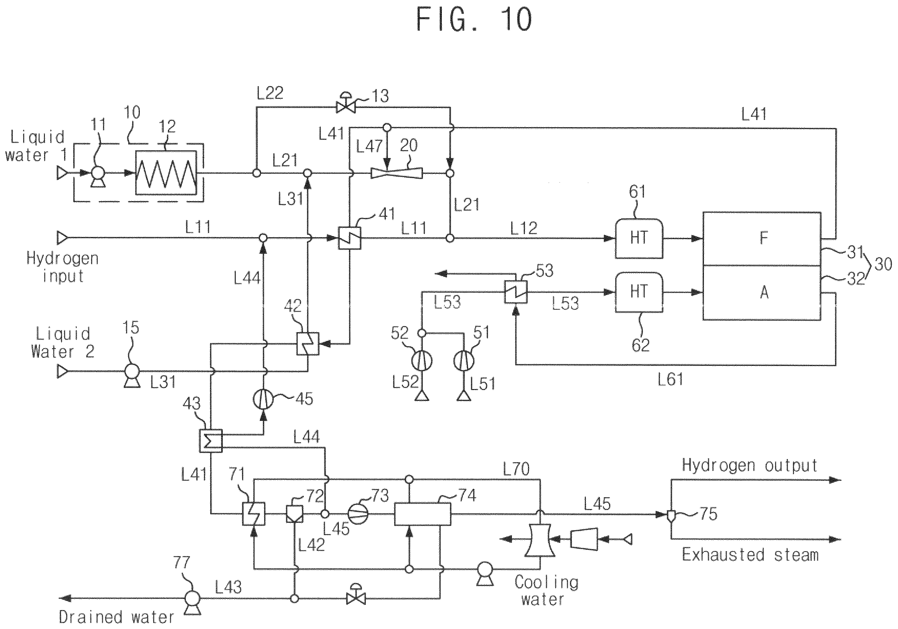

FIG. 10 is a schematic diagram illustrating a reversible water electrolysis system according to a sixth example embodiment of the present invention.

The reversible water electrolysis system according to the present example embodiment is substantially same as the reversible water electrolysis system in FIG. 8 except that a pump 77 is additionally equipped to the water discharge passage L43, and thus same reference numerals are used for the same elements and any repetitive explanation will be omitted.

Referring to FIG. 10, in the reversible water electrolysis system according to the present example embodiment, the pump 77 forces to pump the water discharged via the passage L42 at the drain 72 to discharge the water to outside.

Accordingly, the pressure difference between the inlet of the hydrogen pole 31 and the inlet of the air pole 32 may be eliminated or may be minimized to be in a predetermined range.

As the pressure difference between the inlet of the hydrogen pole 31 and the inlet of the air pole 32 is decreased, the fuel cell system may be operated more stably and efficiently. However, in the conventional fuel cell system, the pressure at the hydrogen pole 31 is higher than that at the air pole 32, since various kinds devices such as passages, heat exchangers and so on are equipped at the inlet and the outlet of the hydrogen pole 31.

However, in the present example embodiment, as the pump 77 is operated, the absorbing force of the pump 77 is applied to the hydrogen pole 31 according to the exhaust passage L41 to decrease the pressure of the inlet of the hydrogen pole 31. Thus, the operation of the pump 77 is controlled such that the pressure difference between the inlet of the hydrogen pole 31 and the inlet of the air pole 32 may be eliminated or may be minimized to be in a predetermined range. Thus, the fuel cell system may be operated more stably and efficiently.

In addition, as the pressure of the inlet of the hydrogen pole 31 decreases, the capacities of the pump and the blower for transferring the hydrogen to the hydrogen pole 31 via the hydrogen supply passage L11 may be decreased. Further, even though the pressure inside of the exhaust passage L41 is entirely decreased to be lower than the atmospheric pressure, the pump 77 forces to discharge the water to outside and thus the water is prevented from being flowed back to the exhaust passage L41.

Accordingly, in the reversible water electrolysis system according to the present example embodiment, the mixed gas including the hydrogen and the steam is properly supplied to the fuel cell according to each of the SOEC mode and the SOFC mode, and the waste heat of the exhaust gas exhausted from the fuel cell is also properly reused. Thus, the efficiency of the system may be increased.

Generally, at the SOEC mode of the reversible water electrolysis system, the system efficiency may be defined as below equations.

$$\eta_1 = \frac{mLHV_{H2}}{E_{waste} + E_{elec}}$$

$$\eta_2 = \frac{mLHV_{H2}}{E_{elec}}$$

$$\eta_3 = \frac{E_{exH2\_Out} - E_{exH2in}}{E_{exWaste} + E_{elec}}$$

In the above equations, $\eta1$ is an efficiency defined as a rate between an output energy and an input energy. The input energy which is a denominator means a calorie of a waste supplied to the boiler 12 and an electric energy supplied to the fuel cell 30 by a renewable energy. The output energy which is a numerator means a calorie of the hydrogen generated at the fuel cell 30, in other words, an amount of the generated hydrogen at the fuel cell 30. $\eta2$ means the elimination of the calorie of the waste at the denominator of $\eta1$. $\eta3$ means an efficiency of exergy, which is the efficiency reflecting both of quantity and quality of the energy.

Likewise, at the SOFC mode of the reversible water electrolysis system, the system efficiency may be defined as below equations.

$$\eta_1 = \frac{E_{elec\_out}}{E_{Waste} + mLHV_{H2}}$$

$$\eta_2 = \frac{E_{elec\_out}}{mLHV_{H2}}$$

$$\eta_3 = \frac{E_{elec}}{E_{exWaste} + E_{exH2\_in} - E_{exH2\_out}}$$

According to the above equations, the efficiency of exergy $\eta3$ was calculated for each of the fourth to sixth example embodiments of the present invention at the SOEC mode. Thus, the efficiency of exergy $\eta3$ is 83.87% for the fourth example embodiment, 83.84% for the fifth example embodiment, and 83.78% for the sixth example embodiment. The efficiency of exergy $\eta3$ is known as between about 70% and about 75% for the conventional reversible water electrolysis system at the SOEC mode. Thus, the system efficiency of the example embodiments of the present invention may be increased compared to the conventional reversible water electrolysis system.

According to the present example embodiments, an exhaust gas from the hydrogen pole is partially used as a fuel of the catalytic combustor so as for heating the exhaust gas of the air pole, so that the temperature of the exhaust gas of the air pole is increased and an increased energy is transmitted to the air. Thus, power consumption of a heat for heating the air supplied to the air pole may be decreased and system efficiency may be increased.

In addition, the water is separated from the exhaust gas exhausted from the hydrogen pole of the fuel cell and then the water is discharged using the drain pump. Here, the operation of the drain pump is properly controlled to maintain a pressure difference between the inlet of the hydrogen pole of the fuel cell and the inlet of the air pole within a predetermined range, so that the fuel cell may be operated stably and more efficiently.

In addition, the exhaust gas exhausted from the hydrogen pole of the fuel cell is partially resupplied to the hydrogen pole using the ejector at the water electrolysis mode, and the exhaust gas is partially recycled and resupplied to the hydrogen pole at the fuel cell mode, so that the system efficiency may be more increased.

Although the exemplary embodiments of the present invention have been described, it is understood that the present invention should not be limited to these exemplary embodiments but various changes and modifications can be made by one ordinary skilled in the art within the scope of the present invention as hereinafter claimed.

**Claims**

1. A reversible water electrolysis system comprising:

   a reversible water electrolysis fuel cell (30) having a hydrogen pole, an air pole and an electrolyte disposed between the hydrogen pole and the air pole, wherein the reversible water electrolysis fuel cell (30) is configured to be operated at one of a water electrolysis mode and a fuel cell mode;
   a first exhaust passage (L41) configured to transfer a first exhaust gas exhausted at the hydrogen pole;
   a second exhaust passage (L61) configure to transfer a second exhaust gas exhausted at the air pole;
   a catalytic combustor (57) configured to partially receive the first exhaust gas and to heat the second exhaust gas;
   an air-exhaust gas heat exchanger (53) equipped at a downstream side of the catalytic combustor and configured to exchange a heat between an air supplied to the air pole and the second exhaust gas;
   a first heat exchanger (41) configured to exchange a heat between a hydrogen supplied to the hydrogen pole and the first exhaust gas;
   a steam supply passage (L21) configured to supply a steam to the hydrogen pole;
   a water discharger configured to remove a water from the first exhaust gas; and
   a pump (77) equipped to a water discharge passage (L43) of the water discharger and configured to pump the water outwardly;
   wherein the pump (77) is configured to be controlled to maintain a pressure difference between an inlet of the hydrogen pole and an inlet of the air pole within a predetermined range.

2. The reversible water electrolysis system of claim 1, wherein the catalytic combustor is configured to be operated at the fuel cell mode and not to be operated at the water electrolysis mode.

3. The reversible water electrolysis system of claim 1, further comprising:

   a heater (61) configured to heat the air passing through the heat exchanger (53) to a predetermined temperature, wherein the heater (61) is configured to be operated at the water electrolysis mode and not to be operated at the fuel cell mode.

4. The reversible water electrolysis system of claim 1, further comprising:

   first and second blowers (51, 52) connected in parallel with an air supply passage (L53) which supplies the air to the heat exchanger (53),
   wherein an amount of an air supply of the second blower (52) is larger than that of the first blower (51),
   wherein the first blower (51) is operated at the water electrolysis mode, and the first blower (51) or the second blower (52) is operated at the fuel cell mode.

5. The reversible water electrolysis system of claim 1, further comprising:

   a recycling passage (L44) configured to at least partially resupply a gas passing through the water discharger to the hydrogen pole as a recycling gas;
   a second heat exchanger (42) configured to exchange a heat between an outer supply water supplied from outside and the first exhaust gas;
   a third heat exchanger (43) equipped to the recycling passage and configured to exchange a heat between the recycling gas and the first exhaust gas; and
   a blower (45) disposed at a downstream of the third heat exchanger (43) of the recycling passage,

wherein the gas passing through the water discharger at the water electrolysis mode is partially supplied as the recycling gas, and the gas passing through the water discharger at the fuel cell mode is entirely supplied as the recycling gas;

wherein the outer supply water evaporated as a steam at the second heat exchanger (42) interflows to the steam supply passage (L21).

6. The reversible water electrolysis system of claim 1, further comprising:

an ejector (20) disposed at the steam supply passage (L21); and

a bifurcation passage (L22) formed at the steam supply passage (L21) and bypassing the ejector;

wherein a motive nozzle of the ejector (20) is connected to a upstream side of the steam supply passage, a diffuser nozzle of the ejector is connected to a downstream side of the steam supply passage, and a suction port of the ejector is connected to a feedback passage (L47) bifurcated from an exhaust passage of the first exhaust gas;

wherein a steam is supplied to the hydrogen pole through the ejector and the recycling passage is closed at the water electrolysis mode, and the steam is supplied to the hydrogen pole through the bifurcation passage (L22) and the recycling passage is open at the fuel cell mode.

**Patentansprüche**

1. Reversibles Wasserelektrolysesystem, umfassend:

Eine reversible Wasserelektrolyse-Brennstoffzelle (30 ) mit einem Wasserstoffpol, einem Luftpol und einem Elektrolyten angeordnet zwischen dem Wasserstoffpol und dem Luftpol, wobei die reversible Wasserelektrolyse-Brennstoffzelle (30) so konfiguriert ist, dass sie entweder in einem Wasserelektrolyse- oder Brennstoffzellen-Modus betrieben wird;

einen ersten Abgaskanal (L41), der so konfiguriert ist, dass er ein aus dem Wasserstoffpol abgeleitetes erstes Abgas weiterleitet;

einen zweiten Abgaskanal (L61), der so konfiguriert ist, dass er ein aus dem Luftpol abgeleitetes zweites Abgas weiterleitet;

eine katalytische Brennkammer (57), die so konfiguriert ist, dass sie das erste Abgas teilweise aufnimmt und das zweite Abgas aufheizt;

einen Luft-Abgas-Wärmetauscher (53), der an einer nachgeschalteten Seite der katalytischen Brennkammer angebracht und so konfiguriert ist, dass er eine Wärme zwischen einer zum Luftpol geleiteten Luft und dem zweiten Abgas austauscht;

einen ersten Wärmetauscher (41), der so konfiguriert ist, dass er eine Wärme zwischen einem zu dem Wasserstoffpol geleiteten Wasserstoff und dem ersten Abgas austauscht;

einen Dampfzufuhrkanal (L21), der so konfiguriert ist, dass er einen Dampf zu dem Wasserstoffpol leitet;

eine Wasserableitungsvorrichtung, die so konfiguriert ist, dass sie Wasser aus dem ersten Abgas entfernt; und

eine Pumpe (77), die mit einem Wasserableitungskanal (L43) der Wasserableitungsvorrichtung ausgestattet und so konfiguriert ist, dass sie das Wasser nach außen pumpt;

wobei die Pumpe (77) so konfiguriert ist, dass sie gesteuert wird, um eine Druckdifferenz zwischen einem Einlass des Wasserstoffpols und einem Einlass des Luftpols innerhalb eines vorbestimmten Bereichs zu halten.

2. Reversibles Wasserelektrolysesystem nach Anspruch 1, wobei die katalytische Brennkammer so konfiguriert ist, dass sie im Brennstoffzellen-Modus und nicht im Wasserelektrolyse-Modus betrieben wird.

3. Reversibles Wasserelektrolysesystem nach Anspruch 1, ferner umfassend:

ein Heizgerät (61), das so konfiguriert ist, dass es die durch den Wärmetauscher (53) geleitete Luft auf eine vorbestimmte Temperatur erwärmt,

wobei das Heizgerät (61) so konfiguriert ist, dass es im Wasserelektrolyse-Modus und nicht im Brennstoffzellen-Modus betrieben wird.

4. Reversibles Wasserelektrolysesystem nach Anspruch 1, ferner umfassend:

erstes und zweites Gebläse (51, 52), die parallel mit einem Luftzufuhrkanal (L53) verbunden sind, der die Luft zum Wärmetauscher (53) leitet,

wobei eine Menge einer Luftzufuhr des zweiten Gebläses (52) größer ist als die des ersten Gebläses (51), wobei das erste Gebläse (51) im Wasserelektrolyse-Modus betrieben wird, und das erste Gebläse (51) oder das zweite Gebläse (52) im Brennstoffzellen-Modus betrieben wird.

5. Reversibles Wasserelektrolysesystem nach Anspruch 1, ferner umfassend:

einen Rückführkanal (L44) der so konfiguriert ist, dass er ein Gas, das durch die Wasserableitungsvorrichtung zu dem Wasserstoffpol läuft, mindestens teilweise erneut zu dem Wasserstoffpol als Recyclinggas leitet; einen zweiten Wärmetauscher (42), der so konfiguriert ist, dass er eine Wärme zwischen von außen zugeführtem Wasser und dem ersten Abgas austauscht; einen dritten Wärmetauscher (43), der mit dem Rückführkanal ausgestattet und so konfiguriert ist, dass er eine Wärme zwischen dem Recyclinggas und dem ersten Abgas austauscht; und ein Gebläse (45), das dem dritten Wärmetauscher (43) des Rückführkanals nachgeschaltet angeordnet ist. wobei das Gas, das im Wasserelektrolyse-Modus durch die Wasserableitungsvorrichtung strömt, teilweise als das Recyclinggas zugeführt wird, und das Gas, das im Brennstoffzellen-Modus durch die Wasserableitungsvorrichtung strömt, vollständig als Recyclinggas zugeführt wird; wobei das von außen zugeführte Wasser, das am zweiten Wärmetauscher (42) verdampft wird, in den Dampfzufuhrkanal (L21) einströmt.

6. Reversibles Wasserelektrolysesystem nach Anspruch 1, ferner umfassend:

einen Ejektor (20), der am Dampfzufuhrkanal (L21) angeordnet ist; und einen Verzweigungskanal (L22), der am Dampfzufuhrkanal (L21) ausgebildet ist und den Ejektor umgeht; wobei eine Treibdüse des Ejektors (20) mit einer vorgeschalteten Seite des Dampfzufuhrkanals verbunden ist, eine Diffusordüse des Ejektors mit einer nachgeschalteten Seite des Dampfzufuhrkanals verbunden ist und ein Sauganschluss des Ejektors mit einem Rückführkanal (L47) verbunden ist, der von einem Abgaskanal des ersten Abgases abzweigt; wobei im Wasserstoffelektrolyse-Modus Dampf durch den Ejektor zum Wasserstoffpol geleitet wird und der Rückführkanal geschlossen ist, und im Brennstoffzellen-Modus Dampf durch den Verzweigungskanal (L22) zum Wasserstoffpol geleitet wird und der Rückführkanal offen ist.

## Revendications

1. Système d'électrolyse de l'eau réversible comprenant :

une pile à combustible par électrolyse de l'eau réversible (30) présentant un pôle hydrogène, un pôle air et un électrolyte disposé entre le pôle hydrogène et le pôle air, dans lequel la pile à combustible par électrolyse de l'eau réversible (30) est conçue pour fonctionner selon un mode parmi un mode électrolyse de l'eau et un mode pile à combustible ; un premier passage d'échappement (L41) conçu pour transférer un premier gaz d'échappement évacué au niveau du pôle hydrogène ; un second passage d'échappement (L61) conçu pour transférer un second gaz d'échappement évacué au niveau du pôle air ; une chambre de combustion catalytique (57) conçue pour recevoir partiellement le premier gaz d'échappement et pour chauffer le second gaz d'échappement ; un échangeur de chaleur air-gaz d'échappement (53) équipé d'un côté aval de la chambre de combustion catalytique et conçu pour échanger de la chaleur entre un air fourni au pôle air et le second gaz d'échappement ; un premier échangeur de chaleur (41) conçu pour échanger de la chaleur entre un hydrogène fourni au pôle hydrogène et le premier gaz d'échappement ; un passage d'alimentation en vapeur (L21) conçu pour fournir de la vapeur au pôle hydrogène ; un dispositif d'évacuation d'eau conçu pour éliminer l'eau du premier gaz d'échappement ; et une pompe (77) équipée d'un passage d'évacuation d'eau (L43) du dispositif d'évacuation d'eau et conçue pour pomper l'eau vers l'extérieur ; dans lequel la pompe (77) est conçue pour être commandée afin de maintenir une différence de pression entre une entrée du pôle hydrogène et une entrée du pôle air à l'intérieur d'une plage prédéfinie.

2. Système réversible d'électrolyse de l'eau selon la revendication 1, dans lequel la chambre de combustion catalytique est conçue pour fonctionner en mode pile à combustible et pour ne pas fonctionner en mode électrolyse de l'eau.

3. Système d'électrolyse de l'eau réversible selon la revendication 1, comprenant en outre :

un dispositif de chauffage (61) conçu pour chauffer l'air traversant l'échangeur de chaleur (53) à une température prédéfinie,
dans lequel le dispositif de chauffage (61) est conçu pour fonctionner en mode électrolyse de l'eau et non pour fonctionner en mode pile à combustible.

4. Système d'électrolyse de l'eau réversible selon la revendication 1, comprenant en outre :

des première et seconde soufflantes (51, 52) reliées en parallèle avec un passage d'alimentation en air (L53) qui fournit l'air à l'échangeur de chaleur (53),
dans lequel une quantité d'alimentation en air de la seconde soufflante (52) est supérieure à celle de la première soufflante (51),
dans lequel la première soufflante (51) fonctionne en mode électrolyse de l'eau et la première soufflante (51) ou la seconde soufflante (52) fonctionne en mode pile à combustible.

5. Système d'électrolyse de l'eau réversible selon la revendication 1, comprenant en outre :

un passage de recyclage (L44) conçu pour réalimenter au moins partiellement un gaz traversant le dispositif d'évacuation d'eau vers le pôle hydrogène en tant que gaz de recyclage ;
un deuxième échangeur de chaleur (42) conçu pour échanger de la chaleur entre une eau d'alimentation extérieure fournie de l'extérieur et le premier gaz d'échappement,
un troisième échangeur de chaleur (43) équipé du passage de recyclage et conçu pour échanger de la chaleur entre le gaz de recyclage et le premier gaz d'échappement ; et
une soufflante (45) disposée en aval du troisième échangeur de chaleur (43) du passage de recyclage,
dans lequel le gaz traversant le dispositif d'évacuation d'eau en mode électrolyse de l'eau est partiellement fourni en tant que gaz de recyclage, et le gaz traversant le dispositif d'évacuation d'eau en mode pile à combustible est entièrement fourni en tant que gaz de recyclage ;
dans lequel l'eau d'alimentation extérieure évaporée en tant que vapeur au niveau du deuxième échangeur de chaleur (42) s'écoule dans le passage d'alimentation en vapeur (L21).

6. Système d'électrolyse de l'eau réversible selon la revendication 1, comprenant en outre :

un éjecteur (20) disposé au niveau du passage d'alimentation en vapeur (L21) ; et
un passage de bifurcation (L22) formé au niveau du passage d'alimentation en vapeur (L21) et contournant l'éjecteur ;
dans lequel une buse motrice de l'éjecteur (20) est reliée à un côté amont du passage d'alimentation en vapeur, une buse de diffuseur de l'éjecteur est reliée à un côté aval du passage d'alimentation en vapeur, et un orifice d'aspiration de l'éjecteur est relié à un passage de rétroaction (L47) bifurqué à partir d'un passage d'échappement du premier gaz d'échappement ;
dans lequel de la vapeur est fournie au pôle hydrogène à travers l'éjecteur et le passage de recyclage est fermé en mode électrolyse de l'eau, et la vapeur est fournie au pôle hydrogène par le passage de bifurcation (L22) et le passage de recyclage est ouvert en mode pile à combustible.

# FIG. 1

EP 3 866 237 B1

FIG. 2

# FIG. 3

EP 3 866 237 B1

FIG. 4

# FIG. 5

EP 3 866 237 B1

FIG. 6

# FIG. 7

EP 3 866 237 B1

# FIG. 8

EP 3 866 237 B1

# FIG. 9

EP 3 866 237 B1

FIG. 10

**EP 3 866 237 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 100776353

- US 2016204454 A